# EUROPEAN PATENT APPLICATION

(11) **EP 2 409 796 A1**
(43) Date of publication of application: **25.01.2012**
(21) Application number: 10753754.0
(22) Date of filing: 15.02.2010
(51) Int. Cl.: B22D 27/00

(54) **METHOD FOR HOMOGENIZING MELTS BY MEANS OF CYCLICAL PHASE TRANSFORMATIONS AND A DEVICE FOR IMPLEMENTING SAME**

(30) Priority: 20.03.2009 RU 2009110094
(71) Applicant: Ansimov, Oleg Vladimirovich, Moscow 117393 (RU)
(72) Inventor: SHTANKIN, Yury Valeryevich, Moscow 119034 (RU); Anismov . Oleg Vladimirovich, Moscow ,117393 (RU)
(74) Representative: Einsel, Martin
(86) International application number: PCT/RU2010/000062
(87) International publication number: WO 2010/107336

(57) **Abstract**

The invention relates to metallurgy. A melt is heated to a superheating temperature above the liquidus line and is poured into a lined and heated mould. As the bulk of the melt cools, the induced crystallization of the melt is carried out in a force field generated by ultrasonic emitters. The onset of crystallization is induced in the central region of the melt with the crystallization front spreading towards the periphery of the melt. After solidification, the billets are heated until they are completely melted, heating is discontinued and the natural crystallization of the melt is carried out so that the crystallization front spreads from the wall of the crystallizer to the centre of the melt. The processes of induced and natural crystallization and melting are periodically repeated as many times as is required for the ingredients in the billet to reach the desired degree of homogeneity. The point of completion of a phase transition is recorded by an ultrasonic measuring system. The heater and the ultrasonic emitters are switched on and off by a control unit comprising a temperature sensor and a sensor of the phase state of the melt. The result is an increase in the degree of homogenization.

## Description

### FIELD OF THE INVENTION

The invention refers to metallurgy, and specifically to methods and devices for improving the homogeneity of distribution of various additives in solutions and mixtures in the course of metallurgical conversion.

### BACKGROUND OF THE INVENTION

The problem of achieving acceptable homogeneity of solutions and particularly mechanical mixtures has invariantly been of interest. The complexity of the problem has been of extreme importance for science and technology due to a host of diverse initial conditions, viz., chemical composition of components, their capability for interaction, weight & space ratios, characteristics of intersolubility, and initial fine crushing of ingredients forming the mixture or solution, etc. By all means, the formation of liquid and solid solutions is characterized by one set of peculiarities to achieve required homogeneity whereas the formation of mechanical mixtures or distribution of mechanical ingredients in liquid or solid solutions is characterized by another set. Known are various methods to solve the problem of getting required homogeneity of solutions and mixtures. The most popular ways are mechanical mixing, raising the temperature of solution processes, mixing at the stage of mechanical crushing, use of dispensing mixers, use of solid or liquid addition alloys (such alloys can be solutions or mixtures). Also, special treatment processes have found a wide application, which are used for improving the homogeneity of the structures. For example, in metallurgy, homogenization or ageing treatment processes are in use. As this takes place, achieving a requisite distribution of components in the solution or mixture with initial fine crushing turns into a complicated engineering problem starting with the size of tens of microns. The problem of injection of particles, at similar initial conditions, with sizes of less than a micron and lower, down to those comparable to nano-particles, is a major scientific & technology problem.

The complexity of the problem slows down, to a considerable extent, the application of technological capabilities that allow using nano-sized components to obtain novel materials. Achievements of today's science and technology in the field of nano-sized components of diverse materials offer wide opportunities to material engineers in their search for new generations of materials. In general, the problem of mixing different components is a separate scientific and engineering challenge. Per se, the availability of a large number of approaches to addressing the problem evidences its intricacy and the absence of a method of required versatility. It is getting more and more clear that solely complex impacts upon the processes are capable of creating an adequate set of preconditions to tackle the problem of mixing nano-sized components.

Known is a method for homogenization of solution-melts or melts when growing single crystals in a reheating oven with a vertical arrangement of heating elements combined as sections. There, a charge is heated up to obtain the melt and then sections of the oven are switched off one by one with an interval ensuring consecutive shifting of the center of convergence of convective melt flows or solution-melt off the center to walls of the crucible (RU 2164561 C1, published on 27.03.2001). When doing so, the mode of irregular convection is set in the crucible which facilitates homogenization of the solution-melt. A device to implement this method comprises a crucible located inside a reheating oven. Around the oven muffle, fifteen vertical heating elements are arranged, as well as a temperature sensor (inside the oven) connected to a temperature regulator, a switch for switching the heating elements on/off.

Convectional mixing does not ensure disintegration of lumps, i.e. particles of ingredients added to the melt. The stage of convectional mixing is followed by that of natural crystallization featuring a broad thermal front that displaces slowly the particles and ensures their disintegration.

### SUMMARY OF THE INVENTION

The technical result of the invention is an improved extent of homogenization through successive initiated crystallization from center to periphery, melting, natural crystallization of the melt. When doing so, the initiated crystallization features a fast-moving front producing a disintegrating effect upon lumps of the ingredients. Additionally, the changing vector of impact of the front upon the lumps also contributes to their disintegration.

The technical result is achieved as follows. The melt homogenization method consists in that the charge or the melt with added ingredients to be solved is heated in a crucible to complete solution and to an overheat temperature above the liquidus temperature of the base metal or the melt. Then, the heating is stopped and, under conditions of monotonic bulk cooling of the overheated solution, the solution is subjected to induced crystallization in an ultrasonic field of force. The crystallization process is initiated in the central zone of the melt, and the crystallization front propagates to the periphery until the onset of natural crystallization. Once the melt solidifies, the ingot is heated in the crucible to complete solution, the heating is stopped and natural crystallization of the melt is ensured with the crystallization front propagating off the walls of the crucible to the center of the melt. Once the ingot solidifies, it is overheated again and the processes of induced and natural crystallization and melting are repeated as many times as required to achieve a pre-specified degree of homogeneity of ingredients in the ingot.

Such an ultrasonic field of force is produced by means of two diametrically arranged transmitters of ultrasonic waves of equal frequency, with a phase difference of 180 degrees, focused at the central zone of the melt.

It is expedient, after each or at least one heating of the mixture of ingot to complete melting, to expose the melt to ultrasonic oscillations of an above-cavitation power.

The technical result is also achieved with the help of a device for homogenization of the melt comprising a lined ingot mold with a heater, two ultrasonic transmitters on the opposite sides of the mold, a temperature sensor in the mold, an emitter and a receiver of the ultrasonic melt phase-state detector (also in the mold), and a controller unit connected to the heater and the phase-state detector; the controller unit being capable of switching on the heater after the melt solidifies in the mold and switching it off after the melt is overheated, and with capability of switching on the ultrasonic emitters in the case of overheating the melt, and switching them off after solidification of the melt.

The proposed method and device ensure cyclic motion of a 3D crystallization front successively from the center of the mold to its periphery and then, after a repeat melting, from the periphery to the center of the mold. As this takes place, in the area adjacent to the two-phase zone of the front, the processes of disintegration of lumps of ingredients to be distributed arise. By increasing or decreasing the number of cycles, a required degree of melt/ingot homogeneity can be achieved.

### BRIEF DESCRIPTION OF THE DRAWINGS

FIGs. 1 and 2 illustrate crystallization process stages.

In FIG.3, the device for implementation of the method is displayed.

### DESCRIPTION OF AN EMBODIMENT OF THE INVENTION

The proposed invention is based on the idea of using the processes that occur in phase transitions of materials in two-phase zones of planar crystallization (solidification) fronts, and the idea of decentralization of particle groups in the pulsating structure of a stationary ultrasonic wave under cyclic repetition of these processes. In brief, the processes under consideration produce a certain combination of separating forces that arise and effect upon aggregations of components' particles distributed arbitrarily in the liquid material (e.g. metal melt). These forces reach their highest values when an aggregation of particles occurs in the area most adjacent to the crystallization (solidification) front and when the aggregation is absorbed by the two-phase zone of the front. Then, while in a solid phase, the separation processes come to an end or slow down radically. Under conditions of a cyclic phase-transition process, the separation processes in the two-phase melting zone grow more active again. Therefore, with a number of cycles large enough, the requisite degree of homogeneity of the distribution of small-sized inclusions in the body of the matrix can be ensured. Additional activation of lump disintegration processes is achieved through the superposition of ultrasonic waves of adequate (above-cavitation) intensity and, particularly, the stationary-wave zone, being the induced crystallization center where the pulsating force acts upon the edges with a doubled frequency of ultrasonic oscillations and an abrupt (180-degree) change in the force vector. As to the processes that take place in the cavitating melt liquid, they are well-known. In general, the proposed algorithm to achieve a required homogeneity of distribution of small and nano -sized components in the bulk of a cast product consists in arranging a successively repeated process in which directional volumetric crystallization (solidification) fronts propagate from the periphery of the mold (crucible) towards the center, followed by a return into a liquid phase and reverse propagation of the 3D crystallization front off the center to the periphery, with a return to a liquid phase. The number of such cycles should be high enough to achieve a required homogeneity of the distribution of necessary inclusions. At liquid-phase stages, in some cases it is expedient to perform treatment by ultrasonic waves of varying power, including above cavitation.

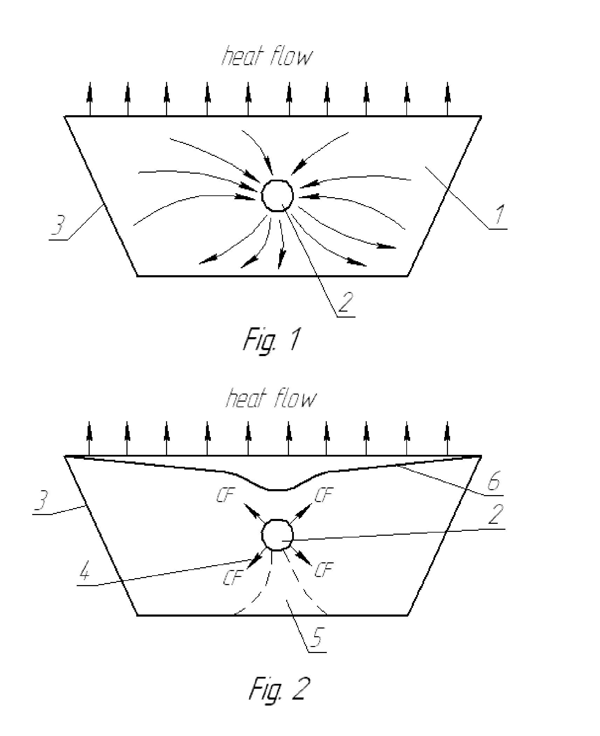

The process of induced crystallization is illustrated in Fig.1 and Fig.2. The elevated-pressure zone (EPZ) (2) is created in the antinodal pressure point of interfering ultrasonic waves focused on the required point of the melt 1.

EPZ 2 (Fig.1) will act like a pump that pumps (via itself) an overheated liquid melt until complete crystallization of the melt. Such movement of the melt is ensured by that in the earth's gravitational field the emerging fragments of crystalline structures (in the elevated-pressure zone) precipitate onto the bottom of the mold (due to a higher density as compared to that of the enclosing melt), thereby activating the melt and creating a zone of induced crystallization in between the bottom and the EPZ.

The movement of the melt 1, while cooling, proceeds until the moment when the contents of the lined mold 3 becomes homogeneous. At this moment, the viscosity of the melt rises in a stepwise manner. Thus, the first stage of the process is completed.

The second stage is depicted in Fig.2. It is characterized by the emergence of the crystallization front (CF) (4) in EPZ 2, which moves towards the periphery of the mold 3.

Before a solid phase is finally formed, a shrinkage cavity 5 will be formed above EPZ 2. The cavity will be less structured than that in the case of natural crystallization. By moving EPZ 2, one can change the location of the shrinkage cavity 5.

As far as metallurgy is concerned, the proposed method of homogenization of distribution of nano-sized high-melting inclusions can be implemented as follows. The melt of required chemical composition with a specified amount of nano-sized inclusions distributed arbitrarily over the melt in the process of melt formation is poured into a heated lined mold of arbitrary shape. Thermodynamic characteristics of the mold that depend on the quality of the lining and the heating device employed are provided through volumetric heating of the melt to a pre-specified temperature above the liquidus line, followed by volumetric cooling to a pre-specified temperature below the liquidus line along the phase diagram of the given metal or alloy. For unequivocal metrological determination of the phase state of the metal (alloy) poured into the mold, the mold is fitted with an emitting/receiving head of the ultrasonic meter of sound velocity in the material of the cast. Based on the difference of this velocity at the given chemical composition of the cast for different phase states, the metrological pattern of phase transitions can be derived to be fed to the process control system. To arrange a 3D crystallization front starting at an induced crystallization center in the middle of the mold, the latter is provided additionally with at least two ultrasonic directional emitters (facing each other) at the opposite ends of the reference direct line going through the 3D center of the mold. In principle, a few such heads can be arranged, yet adhering to the '2n' rule. For additional treatment of the melt by means of ultrasonic waves, the mold is equipped with an ultrasonic emitter capable of delivering ultrasonic radiation of above-cavitation power into the melt. The control system based on a digital processor ensures a specified algorithm of processes.

Once the mold is filled with the melt with a temperature above the liquidus line, the control processor switches off the heating of the mold and switches on the ultrasonic system for treatment of the melt by ultrasonic waves of above-cavitation power. As the melt cools down (in a volumetric quasi-uniform manner) to the liquidus temperature, for well-known reasons, the 3D crystallization front arise in the periphery of the cast product and then moves to the center of the cast, restrained by internal heat. By measuring the velocity of sound in the body of the cast, the metrological ultrasonic system registers the moment of completion of the phase transition, that is, melt crystallization. The control processor switches on the system for heating the cast in the mold. As the melt is heated to a temperature above the liquidus line, the metal (alloy) in the cast returns to a liquid phase. After receiving a signal from the metrological ultrasonic system that the phase transition is completed and the requisite temperature above the liquidus line is achieved by the melt, the control processor switches off the heating of the mold and switches on the system for initiation of crystallization in a weakly overheated melt at the 3D center of the mold. Under the effect of stationary-wave field of force produced by the two anti-phased ultrasonic directional emitters of equal frequency, a local elevated-pressure zone is created in the 3D center zone of the mold, which is a sufficient cause for preferential crystallization under conditions of uniform volumetric cooling of the melt in the cast. The produced 3D crystallization front propagates from the center of the mold to the periphery. After receiving a signal from the metrological ultrasonic system that the phase transition to a solid state is completed and that the requisite temperature of the cast below the liquidus line is achieved, the control processor switches off the system of ultrasonic initiation of crystallization and switches on the system for heating the mold. Once the temperature of the melt reaches the requisite temperature above the liquidus line and a signal from the metrological ultrasonic system is received that the process of phase transition to a liquid state is completed and the melt has reached the pre-specified temperature above the liquidus line, the processor switches on the heating of the mold. While the metal (alloy) is in the liquid phase, additional ultrasonic treatment can be effected by means of a field of force of above-cavitation power, as well as other fields of force. After that, process cycles are repeated as many times as required by the technology. To accelerate the processes, improvement of volumetric thermodynamic characteristics of the mixer mold and creation of extra electrodynamic fluxes in melts, it is expedient to use induction or microwave heaters for heating the mold.

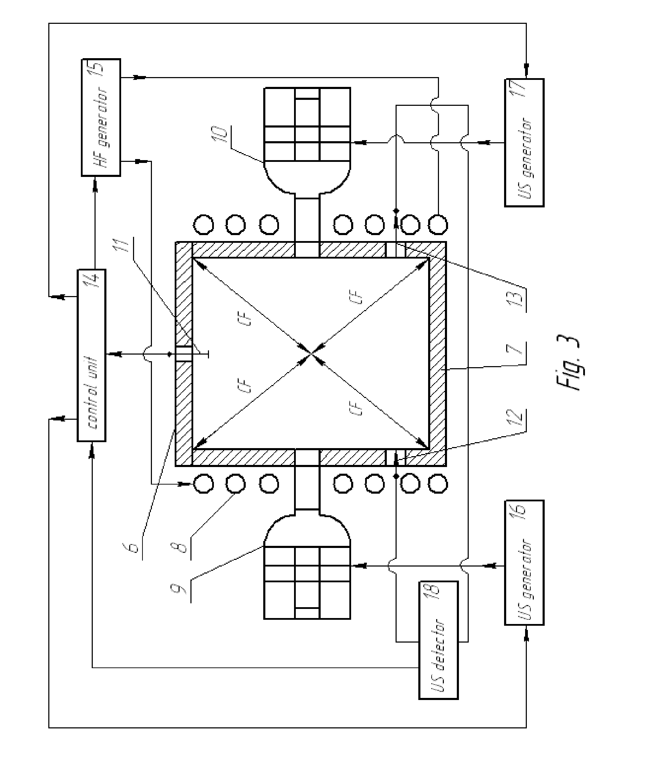

The device for implementation of the above method has been made as an experimental casting installation (Fig.3).

The installation comprises a pot 6 of required volume with lining 7 and an induction heater 8. On the opposite sides of the pot 6, two ultrasonic emitters 9 and 10 are placed. Also, the pot 6 accommodates a temperature sensor 11, an emitter 12 and a receiver 13 of an ultrasonic detector 18 of phase state of the melt. A control unit 14 is connected with high-frequency generator 15 connected to the induction heater 8, ultrasonic generators 16, 17 connected to the ultrasonic emitters 9, 10, with the temperature sensor 11 and the ultrasonic detector 18. The control unit 14 is intended for switching the induction heater 8 on upon completion of solidification of the melt in the pot 6, and switching off after overheating of the melt and switching the ultrasonic emitters 9, 10 on in the case of overheating of the melt, and switching them off after solidification.

The lining 7 ensures a certain content of the melt overheated over the liquidus temperature in the pot 6 for a required period of time while keeping chemical neutrality.

The purpose of the pot 6 is changed depending on specific stage of the process. At the stage of melting, the pot 6 plays the role of an induction furnace crucible. While the pot 6 stays in the field of the induction heater 8 to which electromagnetic energy is supplied from the high-frequency generator 15, the heating, melting and overheating (to a pre-specified temperature) of first the charge (cast product) and then the melt proceed therein. In one way or another, the induction heater 8 is cooled down to maintain its temperature stability. The temperature of the melt is measured by means of the temperature sensor 11 and the measurement result is provided continuously to the control unit 14.

Once the melt reaches a pre-specified temperature of overheating above the liquidus temperature, the control unit 14 switches off, fully or partially, the high-frequency generator 15, the supply of electromagnetic energy to the induction heater 8 is stopped or essentially reduced and the melt starts cooling. As this takes place, the function of the lined pot 6 changes as it plays now the role of a crystallization vat where the superheated melt starts cooling at a rate determined by thermodynamic characteristics of the lined pot 6 and the operating conditions of the high-frequency generator 15.

The operating regime of the crystallization vat (pot 6) is imposed by the control unit 14 and changes successively with the movement of the crystallization front (two-phase zone), namely, natural crystallization (solidification) when the front moves from the periphery to the center of the lined pot 6, and induced crystallization (solidification) when the front moves from the center of the pot to the periphery. To arrange the mode of induced crystallization (solidification) of the melt with the crystallization front (two-phase zone) from the center of the lined pot 6 to the periphery, two radially located ultrasonic emitters 9 and 10 are fitted, which are supplied with electromagnetic energy of ultrasonic frequencies from generators 16 and 17. Controlled by the unit 14, they jointly generate an antinodal point of a stationary ultrasonic wave of a required power in the middle of the lined pot 6, which is sufficient to induce crystallization in this area of the melt being cooled. To prevent the overheating of ultrasonic emitters 9, 10, arbitrary means can be used to cool them.

A reason to switch over from one stage to another and switch between operating modes of the control unit 14 is the phase state of the contents of the lined pot 6. A phase state is identified by means of the phase state detector 18 comprising the ultrasonic emitter 12 and the ultrasonic receiver 13. By the difference in velocity of an ultrasonic wave from the ultrasonic emitter 12 and the receiver 13 (diametrically located) when going via the contents of the lined pot 6, the control unit 14 identifies the phase state (liquid or solid) of the material in the lined pot 6.

The sequence of operation of the installation is as follows: melting and overheating of the material in the lined pot → cooling and natural crystallization (solidification) → melting and overheating of the material → cooling and induced crystallization (solidification) of the material → melting and overheating of the material in the line pot, and so on as many cycles as required to achieve the necessary degree of homogeneity of inclusions in the structure of the cast.

The proposed method has been implemented on a test casting installation (Fig.3) in a series of alternate castings of commercial-purity aluminum A99 with an addition of fine powder of aluminum oxide, followed by a study into the structure of the casts for homogeneity. An addition in the form of a mixture of A99 powder and SiO₂ powder was introduced to a pot with the A99 aluminum melt. After full solution of the addition (the melt was mixed very carefully by means of a ceramic laboratory mixer), the melt was overheated to 850°C. The system of ultrasonic treatment was switched on with initiation of crystallization at the 3D center of the lined pot. Under such conditions, crystallization processes took place with the crystallization front moving off the center to the periphery.

After the cast cooled down to 380 °C, the ultrasonic treatment was switched off, and after full cool-down of the cast, it was melted once again and heated to a temperature of 750°C. Then, in the course of natural cooling in the absence of ultrasonic treatment, natural crystallization processes took place, with the crystallization front moving from the periphery towards the center. Once the cast cooled down, it was taken out, a number of templates were cut off to study into the degree of homogeneity. Then, once the templates were examined, the cast and the templates were loaded into the pot for a next in turn remelting cycle.

Four experimental melting operations were carried out on the test installation, followed by an examination of the N/mm value using the plush-method (N is the calculated number of oxide particles; mm is a template's square millimeter) on similar cast templates. The results of the studies provided in Table 1 evidenced a stable decrease in the NM/mm value.

**Table 1**

| Cycle #/ Template # | 1 | 2 | 3 | 4 |
|---|---|---|---|---|
| 1 | 5 | 20 | 17 | - |
| 2 | 4 | 12 | 9 | 5 |
| 3 | 4 | 8 | 5 | 5 |
| 4 | 5 | 3 | 4 | 3 |

As a result of the series of four experimental remelting cycles carried out on the afore-described installation, casts of commercial-purity aluminum (A99) with a SiO₂ addition were obtained (see Table 1) with a high degree of homogeneity of addition in the volume of the cast, which allows the conclusion in favor of a high efficiency of the method as per the invention.

The method should find a wide application in metallurgy and other fields of materials production. The method will be most efficient in applications with micron and nano -sized dispersion.

## Claims

1. The melt homogenization method consisting in that the charge or the melt with added ingredients to be solved is heated in a crucible to complete solution and to an overheat temperature above the liquidus temperature of the base metal or the melt; then, the heating is stopped and, under conditions of monotonic bulk cooling of the overheated solution, the solution is subjected to induced crystallization in an ultrasonic field of force; the crystallization process is initiated in the central zone of the melt, and the crystallization front propagates to the periphery until the start of natural crystallization; once the melt solidifies, the ingot is heated in the crucible to complete solution, the heating is stopped and natural crystallization of the melt is ensured with the crystallization front propagating off the walls of the crucible to the center of the melt; once the ingot solidifies, it is overheated again and the processes of induced and natural crystallization and melting are repeated as many times as required to achieve a pre-specified degree of homogeneity of ingredients in the ingot.

2. The method as per i.1 wherein the ultrasonic field of force is produced by means of two diametrically located ultrasonic emitters of equal frequency and 180-degree phase difference, focused on the central zone of the melt.

3. The method as per i.1 wherein the melt, while in liquid phase, is subjected to the effect of ultrasonic waves of above-cavitation power.

4. The device for homogenization of the melt comprising a lined ingot mold with a heater, two ultrasonic emitters on the opposite sides of the mold, a temperature sensor in the mold, an emitter and a receiver of the ultrasonic melt phase-state detector (also in the mold), and a controller unit connected to the heater and the phase-state detector; the controller unit being capable of switching on the heater after the melt solidifies in the mold and switching it off after the melt is overheated, and with capability of switching on the ultrasonic emitters in the case of overheating the melt, and switching them off after solidification of the melt.
